# EUROPEAN PATENT SPECIFICATION

(11) **EP 0 614 515 B1**
(45) Date of publication and mention of the grant of the patent: **10.07.1996**
(21) Application number: 92922441.8
(22) Date of filing: 28.10.1992
(51) Int. Cl.: F16H 37/12, B26F 1/42

(54) **A DRIVE UNIT**
ANTRIEBSEINHEIT
ORGANE D'ENTRAINEMENT

(30) Priority: 13.11.1991 GB 9124063
(43) Date of publication of application: 14.09.1994
(73) Proprietor: FIRST GARDINER LIMITED, Lydbrook, Gloucestershire GL17 9ND (GB)
(72) Inventor: GARDINER, Richard, Longhope Gloucestershire (GB)
(74) Representative: Higgins, Michael Roger
(86) International application number: GB9201974
(87) International publication number: WO9310376

(56) References cited:
- GB-A- 231 176
- GB-A- 2 224 967
- US-A- 4 052 906

## Description

This invention relates to a die-cutting press and more particularly to such a press which includes a drive unit for converting unidirectional rotary motion into reciprocating rotary motion.

From GB-A-2 224 967 a die-cutting press according to the preamble of claim 1 is known, in which the drive means comprises a two-directional motor which is started and stopped for each movement of the movable bed, the rotational direction of the motor being reversed after each of the movements.

According to the invention there is provided a die-cutting press comprising:
a movable bed for supporting a die for cutting and/or creasing a sheet;
a pressing roller for applying pressure to the combination of the die and the sheet supported on the bed to form the required cuts and/or creases in the sheet; and
drive means for moving the movable bed back and forth relative to the pressing roller and for reciprocatingly rotating the pressing roller in synchronisation with the motion of the movable bed, characterised in that the drive means comprises;
a drive unit for converting undirectional rotary motion into reciprocating rotary motion, the drive unit comprising a slider, guide means supporting the slider for rectilinear reciprocating motion, rotatable crank means for reciprocating the slider relative to the guide means in response to undirectional rotation of the crank means, and a threaded rotatable member mounted for rotation relative to the guide means and co-operable with a complementarily threaded part movable with the slider so that as the slider is reciprocated to and fro relative to the guide means by the crank means, the threaded rotatable member will undergo reciprocating rotary motion;
wherein one of the threaded member and threaded part is the shaft of a ball screw and the other is the nut of a ball screw, and
wherein the reciprocating rotary motion of the threaded rotatable member causes reciprocating rotation of the pressing roller and reciprocating motion of the bed relative to the pressing roller so that the combination of the die and the sheet is roll pressed between the pressing roller and the bed.

Preferably, the threaded part is a ball screw nut and the threaded rotatable member is a ball screw shaft.

In a preferred embodiment, there are two threaded rotatable members mounted for rotation about parallel spaced apart axes, two threaded parts movable with the slider and co-operable respectively with the two threaded rotatable members, and an output shaft mounted for rotation relative to the guide means and connected to the two threaded rotatable members by gears.

Conveniently, the guide means includes two spaced parallel guide rods and the slider comprises a first part slidably mounted on the guide rods and a second part connected to the first part and supporting the or each threaded part.

The slider may be reciprocated to and fro continuously by continuous unidirectional rotation of the crank means or may be reciprocated to and fro in discontinuous manner by providing clutch means between the crank means and a drive motor.

Preferably, the crank means is arranged so that the velocity of the slider follows or substantially follows a sine wave curve when reciprocated by continuous rotation of the crank means at a constant velocity.

Conveniently, the crank means comprises a rotatable crank wheel and a connecting rod pivotally connected at one end to the crank wheel at a position offset from the axis of rotation of the crank wheel and at the other end to the slider.

The invention will now be more particularly described, by way of example, with reference to the accompanying drawings, in which:-
Figure 1 is a perspective, diagrammatic view of a die-cutting press,
Figure 2 is a side view of one embodiment of a drive unit of the die-cutting press according to the invention,
Figure 3 is a half section along line III-III of Figure 2,
Figure 4 is a half section along line IV-IV of Figure 2,
Figure 5 is a section along line V-V of figure 3, and
Figure 6 is a fragmentary side view showing a modification to the slider of the drive unit of Figures 2 to 5.

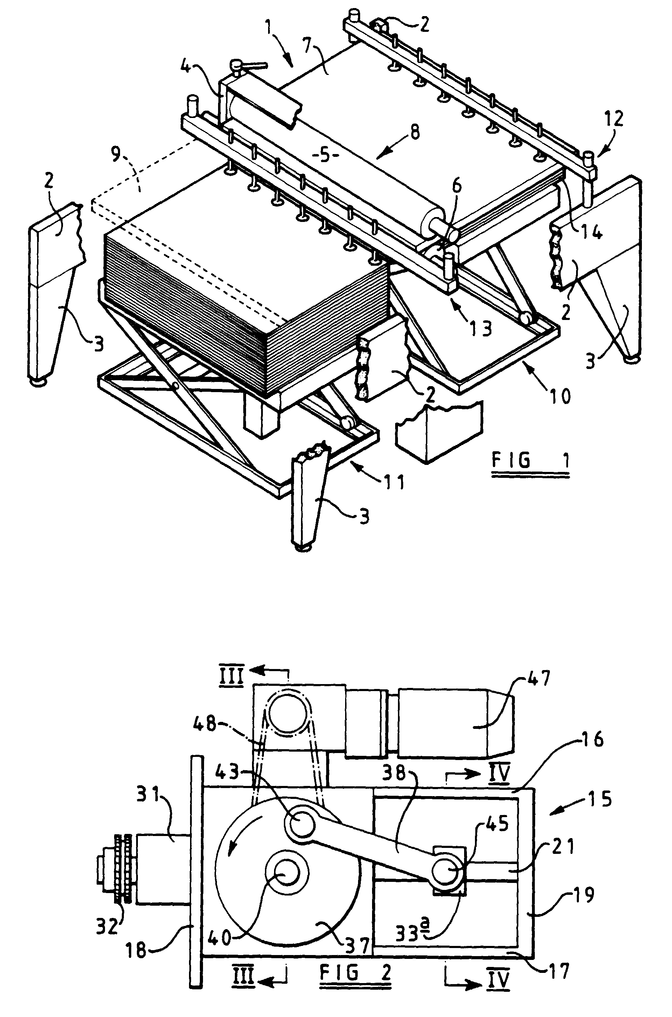

The press 1 shown in Figure 1 is known from GB 2224967A and briefly comprises a frame 2 having legs 3 and a subframe 4 supporting a hollow steel pressing roller 5 and a hollow steel support roller 6. The frame 2 supports a movable bed 7 for supporting a first die member (not shown) for cutting and/or creasing a solid board sheet placed on the die member.

If a full reverse crease is to be provided, a second die member is attached to the pressing roller 5.

The bed 7 is movable horizontally in the direction of the arrow 8 from a loading position slightly removed from the position shown in Figure 1 to a discharge position 9 shown in broken lines and back to the loading position. In moving to and fro between the loading position and the discharge position the bed 7 and the first die member pass between the pressing roller 5 and the support roller 6.

The press 1 also comprises two vertically adjustable tables 10 and 11, arranged below the loading position and the discharge position, respectively, a loading mechanism 12 and a discharge mechanism 13. When the bed 7 is in the discharge position 9, the loading mechanism 12 picks up a solid board sheet from a stack of sheets 14 on the table 10 and places this sheet on the first die member when the bed 7 has moved back to the loading position. The bed 7 with the first die member and the sheet is then passed between the pressing roller 5 and the support roller 6 to the discharge position 9. In this discharge position, the sheet is removed from the first die member by the discharge mechanism 13 and at the same time a fresh sheet is picked up by the loading mechanism 12. When the bed 7 has been drawn back to the loading position, the first-mentioned sheet is placed on the table 11 by the discharge mechanism 13.

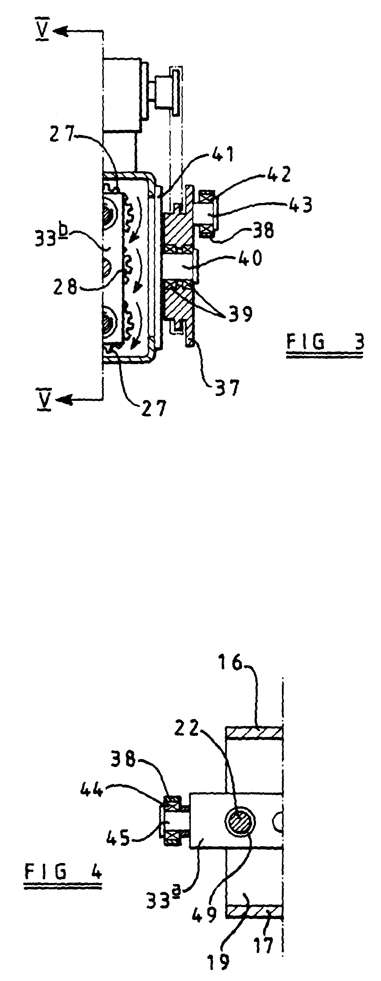

The rollers 5 and 6 and the bed 7 are driven in synchronism and a new form of drive unit suitable for doing this will now be described with reference to Figures 2 to 5.

This drive unit includes a frame 15 which comprises an upper plate 16, a lower plate 17, two end plates 18 and 19 connecting opposite ends, respectively, of the two plates 16 and 17, and an intermediate plate 20 connected between the two plates 16 and 17 and disposed substantially midway between the end plates 18 and 19.

Two parallel spaced apart guide rods 21 and 22 are each secured at one end to the plate 20 and at the other end to the plate 19. Two ball screw shafts 23 and 24 are each rotatably supported at one end in a bearing 25 mounted in the plate 18 and at the other end in a bearing 26 mounted in the plate 20. A spur gear 27 is secured to each of the ball screw shafts 23 and 24 at the end thereof adjacent to the plate 18 and these spur gears 27 mesh with a further spur gear 28 secured to an output shaft 29 which is mounted for rotation in bearings 30 mounted in a hub 31 secured to or integral with the end plate 18. A drive sprocket 32 is secured to the outer end of the output shaft 29.

A slider 33 comprises a first part 33a disposed between the plates 19 and 20 and a second part 33b disposed between the plates 18 and 20 and secured to the part 33a by a push rod 34 which is mounted for axial slidable movement in a bush in the plate 20.

The plane containing the axes of guide rods 21 and 22 is perpendicular to the plane containing the axes of rotation of the ball screw shafts 23 and 24, and the axis of the push rod 34 is at the intersection of these two planes. Moreover, the axis of the push rod 34 is midway between the axes of the guide rods 21 and 22, midway between the axes of rotation of the ball screw shafts 23 and 24, and coincident with the axis of rotation of the output shaft 29.

Two ball screw nuts 35 and 36 which co-operate with the ball screw shafts 23 and 24, respectively, are non-rotatably supported in through bores in the slider part 33b and the slider part 33a is slidably mounted on the guide rods 21 and 22 by way of bushes 49 non-rotatably supported in through bores in the slider part 33a.

Suitable ball screws comprising shafts 23, 24 and nuts 35, 36 are available from Nippon Seiko Kabushiki Kaisha of Nissei Building, 6-3 Ohsaki 1-chome, Shinagawa-Ku, Tokyo, Japan and include a plurality of balls which form one of the two co-operating threads and which are usually held captive with respect to the nut. These balls lie in helical grooves between the shaft and the nut and typically make one and a half, two and a half, or three and a half complete revolutions around the shaft. A guide passage is also provided to allow the balls to continuously recirculate around a closed path which includes the aforesaid helical grooves.

Crank means comprising two crank wheels 37 and two connecting rods 38, one of each on either side of the frame 15, connect the slider 33 to a motor and gearbox unit 47. The crank wheels 37 are mounted for rotation by bearings 39 supported by axles 40 which are secured to respective plates 41 connected between the plates 16 and 17 on opposite sides of the frame 15. Each connecting rod 38 is pivotally connected at one end by a bearing 42 to a pin 43 which is secured to a respective crank wheel 37 at a position offset from the axis of the crank wheel 37, and is connected at the other end by a bearing 44 to a pin 45 secured to the slider part 33a.

Each crank wheel 37 also has a sprocket 46 which is connected to the motor and gearbox unit 47 by a chain drive 48, the motor and gearbox unit being attached to the upper plate 16. The crank wheels 37 rotate about a common axis which passes through the axis of the output shaft 29 and at right angles thereto.

In use, the motor and gearbox unit 47 rotates the crank wheels 37 in one direction and this unidirectional rotation of each crank wheel 37 causes the slider part 33a to reciprocate to and fro along the guide rods 21 and 22. The reciprocating motion of the slider part 33a will cause the slider part 33b to move to and fro along the ball screw shafts 23 and 24 and the ball screw nuts 35 and 36 will co-operate with the ball screw shafts 23 and 24 to rotate the ball screw shafts 23 and 24 in one direction of rotation as the slider part 33b moves in one linear direction and to rotate the ball screw shafts 23 and 24 in an opposite direction of rotation as the slider part 33b moves in an opposite linear direction. This reciprocating rotary motion of the two ball screw shafts 23 and 24 will be transmitted to the output shaft 29 and drive sprocket 32 by the spur gears 27 and 28.

Also, it will be noted, especially from Figure 2, that the slider 33 will be travelling at maximum velocity when the direction of movement of the pin 43 is parallel to the direction of movement of the slider 33, that is when the pin 43 is at the 12 o'clock and 6 o'clock positions relative to the axle 40 as viewed in Figure 2, and the slider 33 is midway through each stroke. As the slider 33 moves from this midway position towards each end of its stroke, the velocity of the slider 33 will gradually decrease with the result that a graph of velocity of the slider against time will follow a sine wave curve provided that the crank wheels 37 are rotated continuously and at constant velocity.

This has the advantage that when this drive unit is used to operate a die-cutting press, such as that shown in Figure 1, the bed 7 will be accelerated gradually until it reaches a position midway between a loading position and a discharge position and will then gradually decelerate. This will put less strain on the die-cutting press and should therefore prolong its life between overhauls.

Also, it is envisaged that by slowing the bed 7 down as it approaches its end of travel positions, it should be possible to provide continuous operation of the die-cutting press, although if necessary the motion of the bed 7 could be made discontinuous by providing a clutch, e.g. a pneumatically operated clutch, between the motor and gearbox of the unit 47.

When used to operate the die-cutting press shown in Figure 1, the sprocket 32 of the drive unit shown in Figures 2 to 5 could be connected to a sprocket (not shown) at one end of the support roller 6 by a chain. The support roller 6 could in turn be connected to the bed 7 by rack and pinion gears, and the support roller 6 could be connected to the pressure roller 5 by gears, sprockets and a timing chain in a manner similar to that described in GB 2224967A.

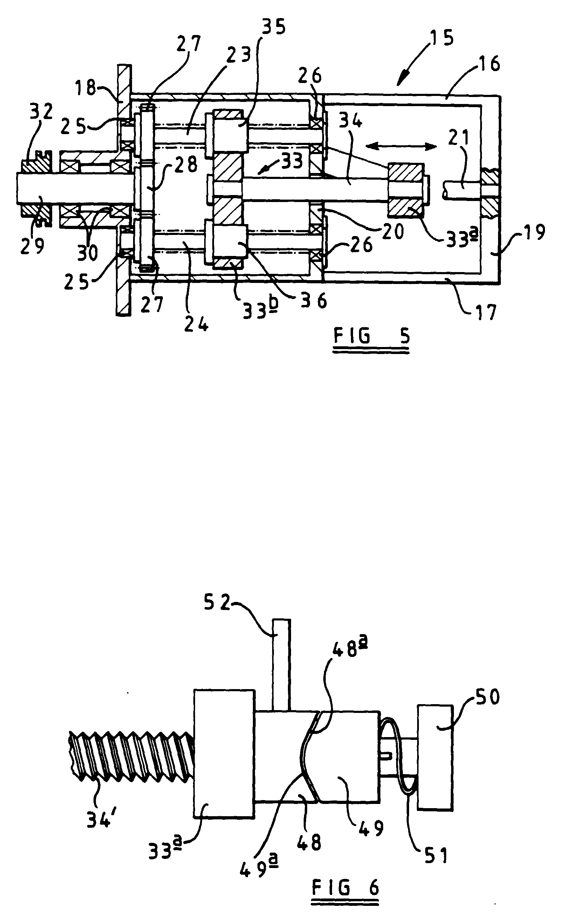

The modification to the slider shown in Figure 6 allows the end of travel positions of the part 33b of the slider to be adjusted relative to the frame 15 so that the end of travel positions of the bed 7 can be adjusted.

As shown in Figure 6, the push rod 34 has a threaded portion 34' which threadably engages with a threaded bore in the part 33a. The push rod 34 is also extended beyond the part 33a and two collars 48 and 49 are mounted on the extended portion of the push rod 34 between the part 33a and a head 50 at the end of the extended portion. The collars 48 and 49 have complementary cam surfaces 48a and 49a which are urged into contact with one another by a compression spring 51 between the collar 49 and the head 50. The collar 48 is angularly movable relative to the push rod 34 by a lever 52 and the collar 49 is splined to the push rod 34 for movement therealong against the urging force of the spring.

This modification allows the effective length of the push rod 34 between the parts 33a and 33b of the slider to be adjusted when the slider 33 is at other than its end of travel positions. To do this, the collar 48 is displaced angularly by the lever 52 which may be operated from a remote location by a cable or linkage. Provided the slider 33 is not at one of its end of travel positions, angular displacement of the collar 48 will result in angular displacement of the collar 49 and the splined connection between the collar 49 and the push rod 34 will cause the latter to turn relative to the part 33a. The mating threads between the threaded portion 34' of the push rod 34 and the part 33a will cause a change in the effective length of the push rod 34 and will move the part 33a away from or towards the part 33b. This is, however, not possible when the slider 33 is at an end of travel position because in that position the connecting rods 38 are parallel to the push rod 34 and in the event that an adjustment is attempted with the slider 33 in an end of travel position the cam surface 48a of the collar 48 will ride over the cam surface 49a of the collar 49 and displace the latter axially against the urging force of the spring 51.

The particular drive unit described above is given by way of example only and various modifications will be apparent to persons skilled in the art without departing from the scope of the present invention as defined by the claims. For example, there may be only a single crank wheel and connecting rod between the slider and motor. The crank wheel could be replaced by a lever arm. There may be only one ball screw shaft and one ball screw nut. Also, the shaft and nut may be interchanged so that the shaft moves with the slider and the nut is fixed relative to the frame. Also, the guide means for guiding the slider may take a different form.

## Claims

1. A die-cutting press comprising:
a movable bed (7) for supporting a die for cutting and/or creasing a sheet;
a pressing roller (5) for applying pressure to the combination of the die and the sheet supported on the bed (7) to form the required cuts and/or creases in the sheet; and
drive means for moving the movable bed (7) back and forth relative to the pressing roller (5) and for reciprocatingly rotating the pressing roller (5) in synchronisation with the motion of the movable bed (7), characterised in that the drive means comprises
a drive unit for converting unidirectional rotary motion into reciprocating rotary motion, the drive unit comprising a slider (33), guide means (21,22) supporting the slider (33) for rectilinear reciprocating motion, rotatable crank means (37,38) for reciprocating the slider (33) relative to the guide means (21,22) in response to unidirectional rotation of the crank means (37,38), and a threaded rotatable member (23,24,35,36) mounted for rotation relative to the guide means (21,22) and co-operable with a complementarily threaded part (23,24,35,36) movable with the slider (33) so that as the slider (33) is reciprocated to and fro relative to the guide means (21,22) by the crank means (37,38), the threaded rotatable member (23,24,35,36) will undergo reciprocating rotary motion;
wherein one of the threaded member and threaded part is the shaft (23,24) of a ball screw and the other is the nut (35,36) of a ball screw, and
wherein the reciprocating rotary motion of the threaded rotatable member (23,24,35,36) causes reciprocating rotation of the pressing roller (5) and reciprocating motion of the bed (7) relative to the pressing roller (5) so that the combination of the die and the sheet is roll pressed between the pressing roller (5) and the bed (7).

2. A die-cutting press as claimed in claim 1, wherein the threaded part is a ball screw nut (35,36) and the threaded rotatable member is a ball screw shaft (23,24).

3. A die-cutting press as claimed in any one of the preceding claims, comprising two threaded rotatable members (23,24,35,36) mounted for rotation about parallel spaced apart axes, two threaded parts (23,24,35,36) movable with the slider (33) and co-operable respectively with the two threaded rotatable members (23,24,35,36), and an output shaft (29) mounted for rotation relative to the guide means (21,22) and connected to the two threaded rotatable members (23,24,35,36) by gears, the pressing roller (5) and bed (7) being driven by the output shaft.

4. A die-cutting press as claimed in any one of the preceding claims, wherein the guide means includes two spaced parallel guide rods (21,22) and the slider (23) comprises a first part (33A) slidably mounted on the guide rods (21,22) and a second part (33B) connected to the first part (33A) and supporting the or each threaded part (23,24,35,36).

5. A die-cutting press as claimed in claim 4, wherein means (34',48,49,52) are provided to adjust the spacing between the first (33A) and second (33B) parts of the slider in order to adjust the end of travel positions of the second part (33B).

6. A die-cutting press as claimed in any one of the preceding claims, wherein the crank means (37,38) is arranged so that the velocity of the slider (33) follows or substantially follows a sine wave curve when reciprocated by continuous rotation of the crank means (37,38) at a constant velocity.

7. A die-cutting press as claimed in any one of the preceding claims, wherein the crank means comprises a rotatable crank wheel (37) and a connecting rod (38) pivotally connected at one end to the crank wheel (37) at a position offset from the axis of rotation of the crank wheel (37) and at the other end to the slider (33).

8. A die-cutting press as claimed in any preceding claim, which further comprises a support roller (6) for supporting the bed (7) during movement of the bed (7) relative to the pressing roller (5).

## Patentansprüche

1. Eine Stanzpresse, die folgende Komponenten aufweist:
einen beweglichen Tisch (7), um ein Stanzwerkzeug zum Schneiden und/oder Sicken eines Blechs zu tragen;
eine Druckwalze (5), um Druck auf die Kombination aus Stanzwerkzeug und Blech auszuüben, die auf dem Tisch (7) getragen wird, um die geforderten Schnitte und/oder Sicken in dem Blech auszuführen; und
ein Antriebsmittel, um den beweglichen Tisch (7) im Verhältnis zur Druckwalze nach rückwärts und vorwärts zu bewegen und um die Druckwalze (5) hin- und hergehend synchron mit der Bewegung des beweglichen Tisches (7) zu drehen, dadurch gekennzeichnet, daß das Antriebsmittel;
eine Antriebseinheit aufweist zur Umwandlung einer in einer Richtung wirkenden Drehbewegung in eine hin- und hergehende Drehbewegung, wobei die Antriebseinheit folgende Komponenten umfaßt: einen Schieber (33), Führungsmittel (21, 22), die den Schieber (33) zur geradlinigen hin- und hergehenden Bewegung tragen, drehbare Kurbelmittel (37, 38), um den Schieber (33) in Reaktion auf die in einer Richtung wirkende Drehbewegung der Kurbelmittel (37, 38) im Verhältnis zu den Führungsmitteln (21, 22) hin- und hergehend zu bewegen, und ein drehbares Gewindeelement (23, 24, 35, 36), das zur Drehung im Verhältnis zu den Führungsmitteln (21, 22) angebracht ist und mit einem mit einem komplementären Gewinde versehenen Teil (23, 24, 35, 36) zusammenwirken kann, das mit dem Schieber (33) bewegt werden kann, so daß das drehbare Gewindeelement (23, 24, 35, 36) eine hin- und hergehende Drehbewegung erfährt, wenn der Schieber (33) durch die Kurbelmittel (37, 38) im Verhältnis zu den Führungsmitteln (21, 22) zu diesen hin und von diesen weg hin- und hergehend bewegt wird;
bei der eines von Gewindeelement und Gewindeteil die Welle (23, 24) einer Kugelspindel ist und das andere die Mutter (35, 36) einer Kugelspindel ist, und
bei der die hin- und hergehende Drehbewegung des drehbaren Gewindeelements (23, 24, 35, 36) die hin- und hergehende Bewegung der Druckwalze (5) und die hin- und hergehende Bewegung des Tisches (7) im Verhältnis zur Druckwalze (5) bewirkt, so daß die Kombination aus Stanzwerkzeug und Blech zwischen der Druckwalze (5) und dem Tisch (7) preßgewalzt wird.,

2. Eine Stanzpresse nach Anspruch 1, bei der das Gewindeteil eine Kugelspindelmutter (35, 36) ist und das drehbare Gewindeelement eine Kugelspindelwelle (23, 24) ist.

3. Eine Stanzpresse nach einem der vorhergehenden Ansprüche, die zwei drehbare Gewindeelemente (23, 24, 35, 36), die zur Drehung um parallele, im Abstand zueinander angeordnete Achsen angebracht sind, zwei Gewindeteile (23, 24, 35, 36), die mit dem Schieber (33) bewegt werden können und jeweils mit den beiden drehbaren Gewindeelementen (23, 24, 35, 36) zusammenwirken können, und eine Abtriebswelle (29) aufweist, die zur Drehung im Verhältnis zu den Führungsmitteln (21, 22) befestigt und mit den beiden drehbaren Gewindeelementen (23, 24, 35, 36) durch Zahnräder verbunden ist, wobei die Druckwalze (5) und der Tisch (7) durch die Abtriebswelle angetrieben werden.

4. Eine Stanzpresse nach einem der vorhergehenden Ansprüche, bei der die Führungsmittel zwei im Abstand zueinander angeordnete parallele Führungsstangen (21, 22) einschließt und der Schieber (33) ein erstes Teil (33A), das gleitend auf den Führungsstangen (21, 22) befestigt ist, und ein zweites Teil (33B) aufweist, das mit dem ersten Teil (33A) verbunden ist und das oder jedes der Gewindeteile (23, 24, 35, 36) trägt.

5. Eine Stanzpresse nach Anspruch 4, bei der Mittel (34', 48, 49, 52) vorhanden sind, um den Abstand zwischen dem ersten (33A) und dem zweiten (33B) Teil des Schiebers zu regulieren, um das Ende der Bewegungspositionen des zweiten Teils (33B) zu regulieren.

6. Eine Stanzpresse nach einem der vorhergehenden Ansprüche, bei der die Kurbelmittel (37, 38) so angeordnet sind, daß die Geschwindigkeit des Schiebers (33) einer Sinuswellenkurve folgt oder im wesentlichen folgt, wenn dieser durch die kontinuierliche Drehung der Kurbelmittel (37, 38) mit einer konstanten Geschwindigkeit hin- und hergehend bewegt wird.

7. Eine Stanzpresse nach einem der vorhergehenden Ansprüche, bei der die Kurbelmittel ein drehbares Kurbelrad (37) und eine Verbindungsstange (38) aufweisen, die an einem Ende gelenkig mit dem Kurbelrad (37) in einer Position, die gegenüber der Rotationsachse des Kurbelrades (37) versetzt ist, und an dem anderen Ende mit dem Schieber (33) verbunden ist.

8. Eine Stanzpresse nach einem der vorhergehenden Ansprüche, die außerdem eine Stützwalze (6) aufweist, um den Tisch (7) während der Bewegung des Tisches (7) im Verhältnis zur Druckwalze (5) zu tragen.

## Revendications

1. Presse à découper à l'emporte-pièce comprenant:
une table mobile (7) pour supporter un emporte-pièce servant à découper et/ou rainer une feuille;
un cylindre de compression (5) pour appliquer une pression à la combinaison de l'emporte-pièce et de la feuille supportée sur la table (7) pour former les coupes et/ou rainures voulues dans la feuille; et
un moyen d'entraînement pour déplacer la table mobile (7) vers l'arrière et vers l'avant par rapport au cylindre de compression (5) et pour faire tourner alternativement le rouleau de compression (5) en synchronisation avec le déplacement de la table mobile (7), caractérisée en ce que le moyen d'entraînement comprend;
une unité d'entraînement pour convertir un mouvement de rotation unidirectionnel en un mouvement de rotation alternatif, l'unité d'entraînement comprenant une coulisse (33), un moyen de guidage (21, 22) supportant la coulisse (33) en vue d'un mouvement rectiligne alternatif, un moyen de manivelle rotatif (37, 38) pour faire aller et venir la coulisse (33) par rapport au moyen de guidage (21, 22) en réponse à la rotation unidirectionnelle du moyen de manivelle (37, 38) et un élément rotatif fileté (23, 24, 35, 36) monté de sorte à pouvoir tourner par rapport au moyen de guidage (21, 22) et à coopérer avec une partie filetée complémentaire (23, 24, 35, 36) pouvant se déplacer avec la coulisse (33), de sorte que lors du déplacement alternatif de la coulisse (33), s'approchant et s'éloignant du moyen de guidage (21, 22) par l'intermédiaire du moyen de manivelle (37, 38), l'élément rotatif fileté (23, 24, 35, 36) est soumis à un mouvement de rotation alternatif;
dans laquelle l'un de l'élément fileté et de la partie filetée constitue l'arbre (23, 26) d'une vis à billes, l'autre constituant l'écrou (35, 36) d'une vis à billes, et
dans laquelle le mouvement de rotation alternatif de l'élément fileté rotatif (23, 24, 35, 36) entraîne une rotation alternative du cylindre de compression (5) et un déplacement alternatif de la table (7) par rapport au cylindre de compression (5), de sorte que la combinaison de l'emporte-pièce et de la feuille est comprimée entre le cylindre de compression (5) et la table (7).

2. Presse à découper à l'emporte-pièce selon la revendication 1, dans laquelle la partie filetée est un écrou d'une vis à billes (35, 36), l'élément fileté rotatif étant un arbre d'une vis à billes (23, 24).

3. Presse à découper à l'emporte-pièce selon l'une quelconque des revendications précédentes, comprenant deux éléments rotatifs filetés (23, 24, 35, 36) montés de sorte à pouvoir tourner autour d'axes parallèles espacés, deux parties filetées (23, 24, 35, 36) pouvant se déplacer avec la coulisse (33) et coopérant respectivement avec les deux éléments rotatifs filetés (23, 24, 35, 36) ainsi qu'un arbre de sortie (29) monté de sorte à pouvoir tourner par rapport au moyen de guidage (21, 22) et connecté aux deux éléments rotatifs filetés (23, 24, 35, 36) par l'intermédiaire d'engrenages, le cylindre de compression (5) et la table (7) étant entraînés par l'arbre de sortie.

4. Presse à découper à l'emporte-pièce selon l'une quelconque des revendications précédentes, dans laquelle le moyen de guidage englobe deux tiges de guidage espacées parallèles (21, 22) la coulisse (33) comprenant une première partie (33A), montée par glissement sur les tiges de guidage (21, 22) et une deuxième partie (33B) connectée à la première partie (33A) et supportant la ou chaque partie filetée (23, 24, 35, 36).

5. Presse à découper à l'emporte-pièce selon la revendication 4, comportant des moyens (34', 48, 49, 52) pour ajuster l'espacement entre les première (33A) et deuxième (33B) parties de la coulisse pour ajuster l'extrémité des positions de déplacement de la deuxième partie (33B).

6. Presse à découper à l'emporte-pièce selon l'une quelconque des revendications précédentes, dans laquelle le moyen de manivelle (37, 38) est agencé de sorte que la vitesse de la coulisse (33) suit ou suit pratiquement une courbe d'onde sinusoïdale lors de son déplacement alternatif par suite de la rotation continue du moyen de manivelle (37, 38) à vitesse constante.

7. Presse à découper à l'emporte-pièce selon l'une quelconque des revendications précédentes, dans laquelle le moyen de manivelle comprend une roue de manivelle rotative (37) et une tige de connexion (38) connectée par pivotement au niveau d'une extrémité à la roue de manivelle (37), en une position décalée par rapport à l'axe de rotation de la roue de manivelle (37), et au niveau de l'autre extrémité à la coulisse (33).

8. Presse à découper à l'emporte-pièce selon l'une quelconque des revendications précédentes, comprenant en outre un cylindre de support (6) pour supporter la table (7) au cours du déplacement de la table (7) par rapport au cylindre de compression (5).
